# EUROPÄISCHE PATENTSCHRIFT

(11) **EP 2 406 186 B1**
(45) Veröffentlichungstag und Bekanntmachung des Hinweises auf die Patenterteilung: **28.09.2016**
(21) Anmeldenummer: 10708722.3
(22) Anmeldetag: 09.03.2010
(51) Int. Cl.: C02F 1/461, C02F 1/467, C02F 103/30, C02F 103/40, C02F 103/16, C02F 101/36, C02F 101/30

(54) **VERFAHREN ZUM ABBAU VON TEILFLUORIERTEN UND PERFLUORIERTEN TENSIDEN**
METHODS FOR DECOMPOSING PARTIALLY FLUORINATED AND PERFLUORINATED SURFACTANTS
PROCÉDÉ DE DÉCOMPOSITION DE TENSIOACTIFS PARTIELLEMENT FLUORÉS ET PERFLUORÉS

(30) Priorität: 09.03.2009 DE 102009013380
(43) Veröffentlichungstag der Anmeldung: 18.01.2012
(73) Patentinhaber: Hansgrohe SE, 77761 Schiltach (DE)
(72) Erfinder: FATH, Andreas, 77716 Haslach (DE)
(74) Vertreter: Patentanwälte Ruff, Wilhelm, Beier, Dauster & Partner mbB
(86) Internationale Anmeldenummer: PCT/EP2010/001444
(87) Internationale Veröffentlichungsnummer: WO 2010/102774

(56) Entgegenhaltungen:
- WO-A1-03/035556
- WO-A1-2006/061192
- WO-A2-2004/018733
- DE-A1- 2 600 084
- US-A- 5 364 508
- US-A- 5 439 577
- US-A1- 2002 153 245
- US-A1- 2007 138 110
- CARTER K.E., FARRELL J.: "Oxidative destruction of perfluorooctane sulfonate using boron-doped diamond film electrodes" ENVIRONMENTAL SCIENCE AND TECHNOLOGY, Bd. 42, 7. Februar 2008 (2008-02-07), Seiten 6111-6115, XP002586290
- ANDREAS FATH / HANSGROHE AG: "Minimierung des PFT Eintrags in die Galvanikabwässer", INTERNET CITATION, 20 December 2008 (2008-12-20), pages 1-140, XP002607502, Retrieved from the Internet: URL:http://www.uvm.baden-wuerttemberg.de/s ervlet/is/62019/Abschlussbericht_PFOS.pdf? command=downloadContent&filename=Abschluss bericht_PFOS.pdf [retrieved on 2010-10-29]

## Beschreibung

Die Erfindung betrifft ein Verfahren zum Abbau von teilfluorierten und perfluorierten Tensiden.

Perfluorierte Tenside (PFT) sind fluorierte organische Verbindungen, an deren Kohlenstoffgerüst die Wasserstoffatome vollständig durch Fluoratome ersetzt sind. Die Kohlenstoff-Fluor-Bindung ist die stabilste Bindung in der organischen Chemie und dementsprechend weisen die perfluorierten Tenside eine hohe thermische und chemische Stabilität auf. Demzufolge sind sie nur sehr schwer abbaubar.

Perfluorierte Tenside kommen nicht natürlich vor und werden ausschließlich synthetisch hergestellt. Sie finden beispielsweise Verwendung in der Textilindustrie zur Herstellung atmungsaktiver Kleidungsstücke und in der Papierindustrie zur Herstellung von schmutz-, fett- und wasserabweisenden Papieren. Weitere Einsatzgebiete sind die Fotoindustrie, die Herstellung von Feuerlöschmitteln und die Luftfahrt. Eingesetzt werden sie auch als Bestandteil von Schmier- und Imprägniermitteln und bei der Herstellung von Fluorpolymeren.

Im Vordergrund steht auch der Einsatz von perfluorierten Tensiden bei der Metallisierung von Substraten aus Metall oder Kunststoff, wobei hier insbesondere der Einsatz in der Galvanotechnik zu nennen ist. Weit verbreitet ist hier die Verwendung von perfluorierten Tensiden bei der galvanischen Verchromung. Hier ist bisher ein Einsatz von perfluorierten Tensiden mit entsprechender Oberflächenaktivität unverzichtbar, um eine gleichmäßige Beschichtung der entsprechenden Substrate aus Kunststoff oder Metall (im Sanitärbereich meist Messing) zu erreichen. In diesem Zusammenhang verhindern die perfluorierten Tenside zum einen die Ausbildung unerwünschter Chromsäureaerosole. Zum anderen werden die perfluorierten Tenside bei der Metallisierung von Kunststoffen als chemisch beständige Netzmittel im Beizschritt (chemisches Aufrauen mit Beizmitteln wie Chromsäure bzw. Chromschwefelsäure) in vergleichsweise großen Mengen eingesetzt.

Dementsprechend enthalten Abwässer, die aus solchen Metallisierungs-, insbesondere Verchromungsverfahren stammen, insbesondere auch die dort anfallenden Spülwässer, diese perfluorierten Tenside. Zusätzlich enthalten solche Abwässer/Spülwässer insbesondere auch Chrom (VI) aufgrund der oben genannten verwendeten Beizmittel. Schließlich ist hervorzuheben, das solche Abwässer/Spülwässer in der Regel einen deutlich sauren (pH< 5) bis stark sauren (pH< 2) pH-Wert besitzen.

Bei den erwähnten Einsätzen in der Galvanotechnik, insbesondere bei der galvanischen Verchromung, finden insbesondere die perfluorierten Alkylsulfonate (PFAS) Verwendung. Hierbei handelt es sich um perfluorierte Tenside, die eine Sulfonat-Gruppe direkt am perfluorierten Kohlenstoffgerüst tragen. Hauptvertreter dieser Verbindungsgruppe ist das Perfluoroktansulfonat (PFOS).

Wie bereits angedeutet, reichern sich die perfluorierten Tenside aufgrund ihrer thermischen und chemischen Stabilität in der Umwelt an. Diese Problematik wurde in den letzten Jahren zunehmend erkannt. In diesem Zusammenhang sei lediglich als Beispiel auf die Presseinformation des Umweltministeriums Baden-Württemberg mit der Überschrift "Perfluorierte Tenside (PFT) im Klärschlamm in Baden-Württemberg" verwiesen, die in einer Pressekonferenz am 03. August 2007 in Stuttgart vorgestellt wurde. Auskunft über die Thematik gibt auch die Veröffentlichung aus UWSF-Z Umwelt Chem. Öko Tox. 17 (1) 36-49 (2005) zum Thema "Risikobewertung von Perfluortensiden als Beitrag zur aktuellen Diskussion zum REACH-Dossier der EU-Kommission". Auch der Zwischenbericht "Perfluorierte Tenside (PFT) in Baden-Württemberg" - Stand August 2008 - des Umweltministeriums Baden-Württemberg ist in dieser Hinsicht interessant.

Die bisherigen Ausführungen gelten sinngemäß auch für teilfluorierte (in der Regel polyfluorierte) Tenside, die teilweise als Alternative oder Ersatz für perfluorierte Tenside zum Einsatz kommen.

Als Folge der oben genannten Problematik bei der Verwendung von teilfluorierten/polyfluorierten und perfluorierten Tensiden werden derzeit bereits Anstrengungen unternommen, die Konzentration dieser Stoffe, insbesondere in Abwässern, Klärschlämmen und dergleichen, zu reduzieren, um diese Stoffe nicht in die Umwelt auszutragen. Die entsprechenden Versuche waren jedoch bisher nur teilweise und nur in begrenztem Umfang erfolgreich.

Im Stand der Technik beschreibt die US 5,364,508 A ein elektrochemisches Verfahren zur Erzeugung von freien Hydroxyl-Radikalen, um chemische Substanzen, die in Wasser gelöst sind, zu oxidieren. Bei diesem Verfahren besteht die Anode aus einem Halbleiter-Metalloxid, das zusätzlich mindestens ein Metall enthält. Vorzugsweise handelt es sich bei dem Halbleiter-Metalloxid um Titandioxid und bei dem zusätzlichen Metall um Niob und/oder Tantal.
Der Offenbarungsgehalt der US 5,364,508 A entspricht im Wesentlichen dem Offenbarungsgehalt der US 5,439,577 A, die eine Continuation-in-Part-Anmeldung zur erstgenannten US 5,364,508 A ist.

Die WO 2006/061192 A1 offenbart ein Verfahren und eine Vorrichtung zur Behandlung von pflanzenschutzmittelhaltigem Abwasser. Als Anoden finden dort bordotierte Diamantelektroden Verwendung. Solche Elektroden werden auch eingesetzt in der Veröffentlichung von Carter und Farrell: "Oxidative Destruction of Perfluorooctane Sulfonate Using Boron-Doped Diamond Film Electrodes" in Environmental Science & Technology, Bd. 42, 7. Februar 2008 (2008-02-07), Seiten 6111 bis 6115.

Schließlich befasst sich die US 2007/0138110 A1 mit einem Elektrosorptionsverfahren, das eine Rückgewinnung von Ammonium-Perfluorooctanoate (APFO) erlaubt.

Dementsprechend stellt sich die Erfindung die Aufgabe, ein Abbauverfahren für teilfluorierte und perfluorierte Tenside zur Verfügung zu stellen, das zum einen diese Tenside zu einem ganz überwiegenden Teil zuverlässig abbaut und zum anderen ohne größere Schwierigkeiten in einen industriellen Produktionsprozess integrierbar ist. Insbesondere soll ein solches Verfahren in galvanotechnische Verfahren integrierbar sein, nämlich in die sogenannte galvanische Verchromung von Substraten aus Kunststoff oder Metall.

Diese Aufgabe wird gelöst durch das Verfahren mit den Merkmalen des Anspruchs 1. Bevorzugte Ausführungsformen dieses Verfahrens sind in den abhängigen Ansprüchen 2 bis 9 dargestellt.

Der Wortlaut sämtlicher Ansprüche wird hiermit durch Bezugnahme zum Inhalt dieser Beschreibung gemacht.

Die gemäß der Erfindung abbaubaren teilfluorierten und perfluorierten Tenside stammen aus Galvanikabwässern, welche bei der Verchromung oder Metallisierung von Metallteilen oder Kunststoffteilen, inbesondere von Sanitärgegenständen, anfallen. Erfindungsgemäß liegt das Tensid in Lösung oder Suspension vor und wird elektrolytisch zersetzt.

In diesem Zusammenhang sollen die oben genannten Begriffe wie folgt erläutert werden:

Unter Abbau soll jeder Vorgang verstanden werden, bei dem die genannten Tenside zerlegt, d.h. als chemische Verbindungen in kleinere Moleküle oder gar in ihre Elemente überführt werden. Im vorliegenden Fall sollen die genannten Tenside dabei möglichst vollständig in nicht toxische oder zumindest weniger toxische Folgemoleküle zerlegt bzw. zersetzt werden.

Unter perfluorierten Tensiden (PFT) sollen alle organischen oberflächenaktiven Verbindungen verstanden werden, bei denen die Wasserstoffatome am Kohlenstoffgerüst vollständig durch Fluoratome ersetzt sind. Auf die eingangs gemachten Erläuterungen wird ausdrücklich verwiesen. Unter teilfluorierten Tensiden sollen alle organischen oberflächenaktiven Verbindungen verstanden werden, bei denen lediglich ein Teil der Wasserstoffatome am Kohlenstoffgerüst durch Fluoratome ersetzt worden ist. In der Regel wird es sich hier um Verbindungen handeln, bei denen am Kohlenstoffgerüst mehr Fluoratome als Wasserstoffatome vorhanden sind. Dementsprechend kann man bei solchen Verbindungen von polyfluorierten Tensiden sprechen.

Unter Suspension soll ein heterogenes Stoffgemisch aus einer Flüssigkeit und darin verteilten Feststoffen verstanden werden. Lösung ist ein homogenes Gemisch, dass aus zwei oder mehr chemischen Stoffen besteht. Insbesondere handelt es sich bei der Erfindung bei Lösungen um Systeme, in denen ein oder mehrere Stoffe in einem flüssigen Lösungsmittel gelöst sind. Die gelösten Stoffe sind dabei gleichmäßig im Lösungsmittel verteilt, und es handelt sich dementsprechend um ein einphasiges System.
Erfindungsgemäß handelt es sich bei der Flüssigkeit der Suspension bzw. dem Lösungsmittel der Lösung vorzugsweise um Wasser.

Unter Elektrolyse soll die Aufspaltung bzw. Zersetzung einer chemischen Verbindung unter Einwirkung von elektrischem Strom verstanden werden. Die physikalischen und chemischen Grundlagen der Elektrolyse sind dem Fachmann ohne weiteres bekannt. In der Regel wird durch zwei Elektroden ein elektrischer Gleichstrom in eine leitfähige Flüssigkeit (Elektrolyt) geleitet. An den Elektroden entstehen durch die Elektrolyse Reaktionsprodukte aus den im Elektrolyten enthaltenen Stoffen. Bei der mit dem Pluspol der Spannungsquelle verbundenen Elektrode handelt es sich um die Anode, bei der mit dem Minuspol der Spannungsquelle verbundenen Elektrode handelt es sich um die Kathode.

Das erfindungsgemäße Verfahren ist so ausgestaltet, dass die Zersetzung der abzubauenden Tenside durch anodische Oxidation erfolgt. Dementsprechend erfolgt die Zersetzung an der als Anode geschalteten Elektrode unter Abgabe von Elektronen. Erfindungsgemäß besteht die Anode aus Titan, insbesondere aus platiniertem, d.h. mit einer Platinschicht überzogenem, Titan.

Die Stromdichte, bei der das erfindungsgemäße Verfahren durchgeführt wird, ist im Grundsatz frei wählbar. Um die Wirtschaftlichkeit des Verfahrens zu steigern, ist es in der Regel von Vorteil, bei möglichst hohen Stromdichten zu arbeiten. Dementsprechend wird das erfindungsgemäße Verfahren in der Regel bei einer Stromdichte von mindestens 1 A/dm² durchgeführt. Weiter bevorzugt sind Stromdichten von mindestenes 3 A/dm², insbesondere zwischen 4 und 6 A/dm².

Die in der Regel mit Hilfe eines Gleichrichters angelegten Spannungen betragen beim erfindungsgemäßen Verfahren in der Regel mindestens 3 V, wobei Spannungswerte von mindestens 10 V, insbesondere von ca. 15 V, weiter bevorzugt sind.

Der Zeitraum, während dessen die elektrolytische Zersetzung beim erfindungsgemäßen Verfahren stattfindet, ist grundsätzlich nicht kritisch. Es soll so lange elektrolytisch zersetzt werden, bis der Abbau der Tenside vollständig ist bzw. den gewünschten Abbaugrad erreicht. Um das erfindungsgemäße Verfahren in einen industriellen Produktionsprozess, beispielsweise einen Galvanisierprozess zu integrieren, werden selbstverständlich möglichst geringe Verfahrensdauern angestrebt. Dementsprechend wird das erfindungsgemäße Verfahren in der Regel über einen Zeitraum von mindestens 0,5 Stunden, vorzugsweise von mindestens 3 Stunden, durchgeführt. In bestimmten Fällen können auch Verfahrensdauern von mindestens 10 Stunden zweckmäßig sein.

Das erfindungsgemäße Verfahren kann ohne weiteres bei Raumtemperatur (Umgebungstemperatur) durchgeführt werden. Mit Vorteil ist es bei höheren Temperaturen (als Raumtemperatur) durchführbar, vorzugsweise bei Temperaturen größer als 40 °C. Insbesondere liegt die Verfahrenstemperatur dabei zwischen 40 °C und 80 °C, beispielsweise bei ca. 60 °C. Die höheren Temperaturen führen in der Regel zu einem schnelleren und ggf. vollständigeren Abbau der Tenside.

Die dem Verfahren zugeführte und/oder dort entstehende Wärme kann mit Hilfe mindestens eines Wärmetauschers genutzt werden, beispielsweise zur Vorwärmung des zu behandelnden Abwassers/Spülwassers.

Die erfindungsgemäß abbaubaren perfluorierten Tenside können grundsätzlich in die Stoffgruppen der perfluorierten Alkylsulfonate (PFAS), der perfluorierten Carbonsäuren (PFCA) und der polyfluorierten Telomeralkohole (FTOH) unterteilt werden.

Aufgrund ihrer industriellen Verwendung kommen für das erfindungsgemäße Abbauverfahren in erster Linie die perfluorierten Alkylsulfonate (PFAS) in Frage. Wichtigster Vertreter ist hier das Perfluoroktansulfonat (PFOS), wie es beispielsweise in der Galvanotechnik als Netzmittel oder Aerosolbinder eingesetzt wird.

Perfluoroktansulfonat (PFOS) ist ein anionisches Fluortensid, das zwar besonders vorteilhaft verwendbar, jedoch besonders schwierig analysierbar und abbaubar ist. Durch die extrem hydrophobe Perfluoralkylgruppe ist PFOS thermisch und chemisch sehr inert und wird dementsprechend weder in stark sauren noch in alkalischen noch in reduzierenden noch in oxidierenden Medien angegriffen. Dies erhöht zwar seine Standzeit in oxidativen Medien, wie beispielsweise in Chromschwefelsäure, die bei der Verchromung eingesetzt wird, macht jedoch, wie bereits erwähnt, seinen Abbau sehr schwierig. Gleiches gilt in entsprechender Weise für das Perfluorobutansulfonat (PFBS).

Die erläuterten Verfahrensvarianten treffen nicht nur auf die bisher diskutierten perfluorierten Tenside zu, sondern auch auf die teilfluorierten/polyfluorierten Tenside. Von diesen Tensiden, die ebenfalls nach dem erfindungsgemäßen Verfahren abbaubar sind, soll an dieser Stelle insbesondere das H4-Perfluoroctylsulfonat (H4PFOS) hervorgehoben werden. Dieses Tensid wird auch als 1H, 1H,2H,2H-Perfluorocytylsulfonat bezeichnet.

Mit besonderem Vorteil wird ein bestimmtes Volumen an Abwasser (Lösung/Suspension) nach dem erfindungsgemäßen Verfahren behandelt. Es wird also eine Charge bzw. ein Batch eines solchen Abwassers in einem geeigneten Behälter oder Reaktor so lange behandelt, bis die darin enthaltenen Tenside in der gewünschten Weise abgebaut bzw. zerstört sind.

In Weiterbildung wird das erfindungsgemäße Verfahren in vorteilhafter Weise kontinuierlich betrieben. Auf diese Weise lässt es sich besonders gut in einen industriellen Produktionsprozess, beispielsweise einen Galvanisierprozess integrieren. Dabei wird beispielsweise Abwasser, das die abzubauenden Tenside enthält, kontinuierlich in eine oder mehrere Elektrolysezellen eingeleitet und nach der elektrolytischen Zersetzung aus diesen Zellen wieder herausgeleitet. Dies wird im Zusammenhang mit den Beispielen noch näher erläutert.

In Weiterbildung wird das erfindungsgemäße Verfahren in vorteilhafter Weise als Durchflussverfahren betrieben. Dies soll zunächst bedeuten, dass die das Tensid enthaltende Lösung oder Suspension die Vorrichtung, in der die Elektrolyse stattfindet, durchströmt, wobei mindestens ein geeigneter Zufluss und mindestens ein geeigneter Abfluss vorgesehen ist. Insbesondere kann es vorgesehen sein, dass ein gleichbleibender Volumenstrom vorgesehen ist, mit dem die Suspension oder Lösung in die entsprechende Vorrichtung, beispielsweise Elektrolysezelle, eingeleitet und aus ihr wieder herausgeleitet wird.

Vorzugsweise kann bei dem erfindungsgemäßen Verfahren mindestens eine Elektrode, vorzugsweise die Anode, derart ausgebildet sein, dass die Lösung oder Suspension durch diese Elektrode hindurchleitbar ist.

Auf diese Weise wird ein besonders guter Kontakt zwischen dieser Elektrode und der zu behandelnden Lösung/Suspension erreicht und damit ein besonders effektiver Abbau der entsprechenden Tenside.

Das erfindungsgemäße Verfahren ist geeignet zur Zersetzung von teilfluorierten und perfluorierten Tensiden, die aus Galvanik-abwässern stammen. Dabei handelt es sich um solche Abwässer, die bei der Verchromung von Metallteilen oder Kunststoffteilen anfallen. Bei diesen Metallteilen oder Kunststoffteilen kann es sich insbesondere um Sanitärgegenstände handeln.

Besonders geeignet ist das erfindungsgemäße Verfahren zur Behandlung von Abwässern, die bei der Metallisierung von Kunststoffen in dem dort notwendigen Beizschritt, d.h. dem chemischen Aufrauen dieser Kunststoffe mit Beizmitteln, wie Chromsäure bzw. Chromschwefelsäure, anfallen. Dort werden nämlich die genannten teilfluorierten und perfluorierten Tenside in vergleichsweise großen Mengen als chemisch beständige Netzmittel eingesetzt. Sie sind dann in den dort auftretenden Abwässern, insbesondere in den sogenannten Spülwässern enthalten. In den Spülwässern liegen die Tenside in vergleichsweise geringen Konzentrationen vor, die jedoch meist weit oberhalb der tolerierbaren Grenzwerte liegen.

Das erfindungsgemäße Verfahren ist mit einer ganzen Reihe von Vorteilen verbunden. So wird mit der elektrolytischen Zersetzung ein vergleichsweise einfach handhabbares elektrochemisches Verfahren zum Abbau teilfluorierter und perfluorierter Tenside bereitgestellt. Wie die Beispiele noch zeigen, lässt sich auf diese Weise ein gegebenenfalls sogar vollständiger Abbau der Tenside innerhalb vergleichsweise kurzer Verfahrenszeiten erreichen. Die Verfahrensparameter sind dabei vergleichsweise einfach einstellbar und reproduzierbar. Außerdem besitzt das erfindungsgemäße Verfahren das Potential, in bestehende Produktionsprozesse integriert zu werden. Hier können in den Galvanisierverfahren entsprechende Abwässer, beispielsweise die Spülwässer aus der Chrombeize, bei der Kunststoffmetallisierung aufgearbeitet werden, und das gegebenenfalls sogar kontinuierlich.

Zusätzlich können durch das erfindungsgemäße Verfahren ggf. weitere in der Lösung oder Suspension enthaltene Stoffe abgebaut oder entfernt werden. Dies kann durch Reduktion an der Kathode und/oder Oxidation an der Anode geschehen. So ist es nach der Erfindung möglich, das in einem Abwasser oder Spülwasser aus der Verchromung enthaltene Chrom (VI) mindestens teilweise (beispielsweise bis zu 50 %) zu Chrom (III) zu reduzieren. Damit wird erreicht, dass weniger Chemikalien, wie Bisulfite (Hydrogensulfite) u.dgl., in einem nachgeschalteten Verfahrensschritt der Reduktion von Chrom (VI) zu Chrom (III) eingesetzt werden müssen.

Schließlich wird auch eine Vorrichtung zum elektrolytischen Abbau von teilfluorierten und perfluorierten Tensiden, wie sie insbesondere in Abwässern, Klärschlämmen und dergleichen enthalten sind, offenbart. Diese Vorrichtung ist zur Durchführung des bereits beschriebenen erfindungsgemäßen Verfahrens vorgesehen.

Die Vorrichtung weist neben anderen ggf. für eine Elektrolyse notwendigen und zweckmäßigen Bestandteilen mindestens eine als Kathode schaltbare Elektrode und mindestens eine als Anode schaltbare Elektrode auf. Auf die eingangs gemachten Erläuterungen zum Thema Elektrolyse wird ausdrücklich Bezug genommen und verwiesen.

Die Vorrichtung weist mindestens zwei, aus Anode und Kathode bestehende Elektrodenpaare auf. Dabei können die Elek-troden vorzugsweise als Platten und/oder Stäbe ausgebildet sein.

Vorzugsweise ist mindestens eine Elektrode, vorzugsweise die als Anode schaltbare Elektrode, derart ausgebildet und/oder angeordnet, dass eine die Tenside enthaltende Lösung oder Suspension mindestens teilweise, vorzugsweise vollständig, durch diese Elektrode hindurchleitbar ist.

Durch die genannten Ausgestaltungen der Vorrichtung wird erreicht, dass ein guter Kontakt zwischen der Lösung oder Suspension einerseits und der entsprechenden Elektrode andererseits gewährleistet ist. Dementsprechend kann ein (möglichst) großer Anteil der in der Lösung oder Suspension enthaltenen Tenside elektrolytisch zersetzt werden. Ein möglichst großer Anteil der Tenside befindet sich dann nämlich räumlich nahe an der entsprechenden Elektrodenoberfläche, an der der Zersetzungsvorgang einschließlich des dafür notwendigen Elektronenaustauschs stattfindet.

In den Fällen, bei denen die gesamte Lösung oder Suspension durch die Elektrode oder Elektroden (vorzugsweise die Anode, an der eine anodische Oxidation stattfindet) hindurchgeleitet wird, ist die Lösung bzw. Suspension geradezu "gezwungen", mit der Elektrodenoberfläche in Kontakt zu kommen. Damit erfolgt eine möglichst effektive elektrolytische Zersetzung der Tenside. Zusätzlich ist dieser Zersetzungsprozess noch durch Verfahrensparameter, wie Temperatur, Durchflussgeschwindigkeit und dergleichen steuerbar und damit optimierbar.

In Weiterbildung ist die Vorrichtung mit Vorteil so ausgestaltet, dass mindestens zwei Elektrodenpaare (bestehend aus Anode und Kathode) hintereinander oder nebeneinander anordenbar oder angeordnet sind. Insbesondere sind mindestens vier solche Elek-trodenpaare hintereinander anordenbar oder angeordnet.

Dadurch wird erreicht, dass die die Tenside enthaltende Lösung oder Suspension mehrmals mit den entsprechenden Elektroden in Kontakt kommt und die elektrolytische Zersetzung mehrfach stattfindet.

Grundsätzlich können die erwähnten Elektrodenpaare, die man jeweils für sich als Elektrolysezelle bezeichnen könnte, beliebig hintereinander anordenbar oder angeordnet sein. Vorzugsweise lassen sich solche Elektrodenpaare auch in Form von sogenannten Arrays hinter- und/oder nebeneinander anordnen, so dass viele elektrolytische Zersetzungen parallel stattfinden können. So kann beispielsweise eine gemeinsame Zuleitung für die Lösung oder Suspension, beispielsweise das Abwasser vorgesehen sein, das dann parallel über geeignete Verzweigungen in nebeneinander angeordnete Reihen von Elektrolysezellen eingeleitet und nach den entsprechenden elektrolytischen Zersetzungsprozessen wieder, gegebenenfalls über einen gemeinsamen Abfluss, ausgeleitet wird. Die Elektrolysezellen mit einem oder mehreren Elektrodenpaaren (bestehend aus Anode und Kathode) können dabei einzeln oder zu mehreren nach Art von Modulen zusammengefasst sein. Dies erleichtert den Austausch einzelner Module und macht eine Erweiterung oder Verkleinerung der Gesamtanlage ohne großen Aufwand möglich.

Bei der Vorrichtung ist es weiter bevorzugt, wenn es sich bei mindestens einem Teil der Anoden, vorzugsweise bei allen Anoden um Anoden aus Titan handelt. Insbesondere können solche Anoden aus platiniertem Titan bestehen.

In den Fällen, in denen die die Tenside enthaltende Lösung oder Suspension durch die Anode hindurchgeleitet werden soll, müssen solche Anoden von der Lösung oder Suspension durchströmbar sein. Dabei kann es sich beispielsweise um gitterförmige Anoden handeln, wobei mehrere oder eine Vielzahl von solchen Anodengittern hintereinander angeordnet sein können. Vorzugsweise handelt es sich in solchen Fällen jedoch um sogenannte Drahtpresslinge, bei denen eine Vielzahl von Drähten zu einer unregelmäßigen dreidimensionalen Struktur verpresst sind. Auf diese Weise wird eine Vielzahl von offenen Hohlräumen oder Poren geschaffen, durch die Lösung/Suspension hindurchtreten kann. Drahtstärke, Größe der Hohlräume, Dicke des Presslings und dergleichen sind dabei variierbar.

In Übereinstimmung mit den bisherigen Ausführungen bestehen solche Drahtpresslinge erfindungsgemäß vorzugsweise aus Titan, vorzugsweise aus platiniertem Titan. Dabei kann ein Titandrahtpressling aus platiniertem Titandraht gefertigt oder auch nachträglich platiniert sein.

Weiter ist es erfindungsgemäß bevorzugt, wenn es sich bei mindestens einem Teil der Kathoden, vorzugsweise bei allen Kathoden, um Kathoden aus Blei oder aus Bleilegierungen handelt- Hier werden erfindungsgemäß in der Regel Bleistäbe eingesetzt.

Ggf. kann der Vorrichtung mindestens ein Wärmetauscher zugeordnet sein, mit dessen Hilfe die der Vorrichtung zugeführte und/oder dort entstehende Wärme ausgenutzt werden kann, beispielsweise zur Vorwärmung des zu behandelnden Abwassers/Spülwassers.

Die genannten Vorteile und weitere Vorteile der Erfindung zeigen sich in den jetzt folgenden Beispielen in Verbindung mit den Unteransprüchen. Dabei können die einzelnen Merkmale für sich allein oder in Kombination miteinander verwirklicht sein.

In den Zeichnungen zeigen
- Fig. 1: den elektrolytischen Abbau von PFOS nach einem erfindungsgemäßen Verfahren in graphischer Darstellung,
- Fig. 2: den elektrolytischen Abbau von H4PFOS nach einem erfindungsgemäßen Verfahren in graphischer Darstellung, und
- Fig. 3: eine Vorrichtung in schematischer Darstellung.

### Beispiel 1

Zur Prüfung der Funktionsfähigkeit des erfindungsgemäßen Verfahrens wurde Spülwasser, d.h. Abwasser mit Wasser als Lösungsmittel, untersucht und erfindungsgemäß behandelt. Dieses Abwasser stammt aus der bereits erläuterten Chrombeize von zu metallisierenden Kunststoffgegenständen, wobei diese Gegenstände nach dem eigentlichen Beizschritt mit Wasser gespült werden, um die Beizlösung vollständig von den Gegenständen zu entfernen. Auf diese Weise werden die als Netzmittel in der Chrombeize enthaltenen Tenside in das Spülwasser überführt und sind in den entsprechenden Abwässern enthalten.

Solche Spülwässer wurden im Labormaßstab erfindungsgemäß behandelt. Dazu wurden jeweils 2 I Abwasser, das entweder PFOS oder H4PFOS als Tensid enthielt, in ein Becherglas überführt. Anhand einer Probe wurde die Ausgangskonzentration des jeweiligen Tensids bestimmt. Dann wurden in die Flüssigkeit im Becherglas ein platiniertes Titangitter als Anode und ein Bleistab als Kathode getaucht. Das Titangitter wurde mit dem Pluspol eines Gleichrichters verbunden, der Bleistab mit dem Minuspol. Über den Gleichrichter konnten verschiedene Spannungen bzw. Stromstärken angelegt werden. Anhand der Fläche des Titangitters ließ sich aus der Stromstärke die Stromdichte bestimmen.

Die Ergebnisse für den elektrolytischen Abbau von PFOS bei Raumtemperatur sind in Tabelle 1 zusammengefasst.

**Tabelle 1**

| Versuchs Nr. | Bezeichnung | Behandlungdauer [h] | C_{PFOS} [µg/l] |
|---|---|---|---|
| 0 | | - | 4600 |
| 1 | 2A, 4V | 1 | 3400 |
| 2 | | 3 | 2808 |
| 3 | | 20 | 2352 |
| 4 | 10A, 15V | 1 | 67 |
| 5 | | 3 | 0 |
| 6 | | 20 | 0 |

Versuch Nr. 0 entspricht der Ausgangskonzentration c an PFOS in µg/l. Dieser Ausgangswert ist 4600 µg/l.

Die Versuchsnummern 1 bis 3 entsprechen den verbliebenen Konzentrationen an PFOS bei einer angelegten Spannung von 4 V und einer Stromstärke von 2 A (entspricht 1 A/dm²). Hier zeigt sich, dass sich die Ausgangskonzentration an PFOS im Abwasser nach 20 Stunden elektrolytischer Zersetzung fast halbiert hat.

Die Versuchsnummern 4 bis 6 zeigen die verbliebenen Konzentrationen an PFOS bei einer Spannung von 15 V und einer Stromstärke von 10 A (entspricht einer Stromdichte von 5 A/dm²). Hier zeigt sich, dass das PFOS bei diesen Verfahrensbedingungen bereits nach einer Stunde fast vollständig und nach drei Stunden vollständig abgebaut ist. Innerhalb von einer Stunde Behandlungszeit reduziert sich die PFOS-Konzentration um 98,5 %. Nach drei Stunden ist das PFOS vollständig abgebaut (100 % Reduzierung).

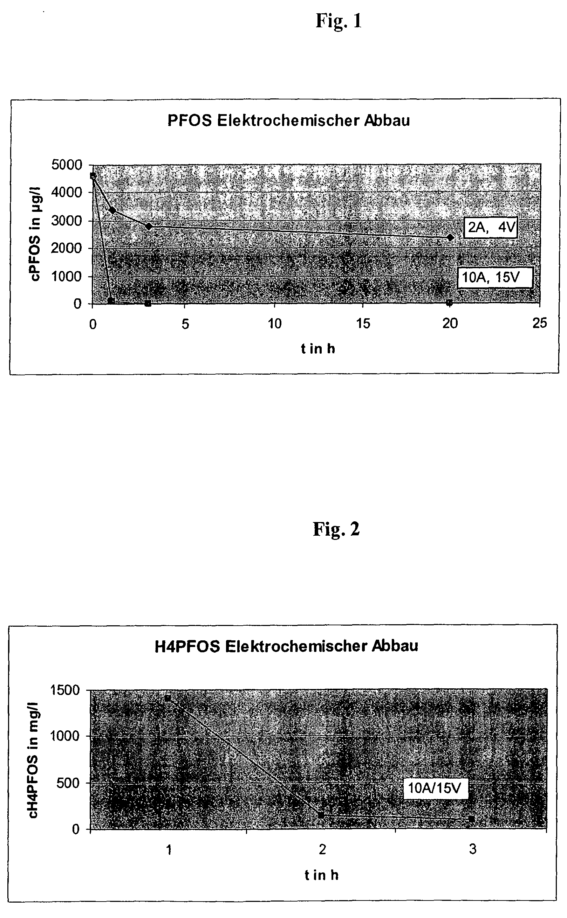

Die in der Tabelle 1 dargestellten Ergebnisse sind in Fig. 1 graphisch dargestellt.

Fig. 2 zeigt in entsprechender Weise graphisch den Abbau von H4PFOS bei Raumtemperatur.

Weitere Versuche und Auswertungen zeigen sowohl bei PFOS als auch bei H4PFOS:
- höhere Stromdichten führen bei gleicher Ausgangskonzentration des Tensids in der Regel zu einem schnelleren Abbau, wobei sich dieser Effekt ausgehend von einer Mindeststromdichte mit zunehmender Stromdichte abschwächt;
- höhere Arbeitstemperaturen (in der Regel bis zu 80 °C) führen bei gleicher Ausgangskonzentration des Tensids in der Regel zu einem schnelleren Abbau, wobei sich dieser Effekt mit zunehmender Temperatur abschwächt;
- das organisch gebundene Fluor im Tensid wird durch das erfindungsgemäße Verfahren in der Regel bis zum Fluorid abgebaut.

### Beispiel 2

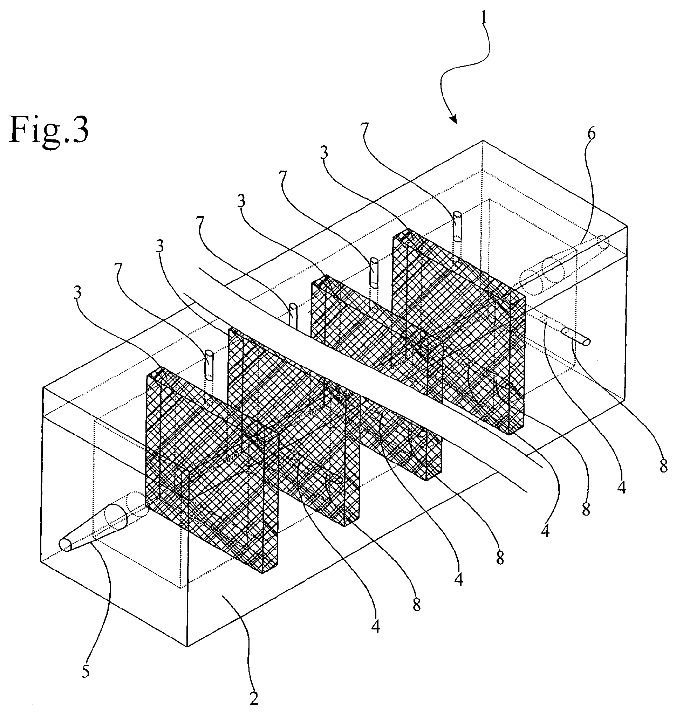

In diesem Beispiel wird mit einer Ausführungsform der beschriebenen Vorrichtung, nämlich der Vorrichtung 1 gemäß Fig. 3, gearbeitet.

Wie Fig. 3 in schematischer Darstellung zeigt, weist die Vorrichtung 1 ein Gehäuse 2 auf, in dem im dargestellten Fall vier Elektrodenpaare bestehend aus Anoden 3 und Kathoden 4 untergebracht sind. In Fig. 3 ist zeichnerisch angedeutet, dass die Zahl von vier Elektrodenpaaren lediglich beispielhaften Charakter hat und selbstverständlich auch mehr oder weniger Elektrodenpaare im Gehäuse 2 untergebracht sein können.

Weiter weist das Gehäuse 2 Anschlüsse 5 und 6 auf, mit deren Hilfe die zu behandelnden Lösungen oder Suspensionen mit den abzubauenden Tensiden in das Gehäuse 2 eingeleitet und wieder herausgeleitet werden können. Schließlich zeigt Fig. 3 elektrische Anschlusselemente 7 und 8, mit deren Hilfe die Anoden 3 bzw. Kathoden 4 kontaktiert und mit einer Spannungsquelle, beispielsweise einem Gleichrichter, verbunden werden können.

Wie in Fig. 3 ebenfalls schematisch dargestellt ist, sind die Anoden 3 derart im Gehäuse 2 angeordnet, dass die durch das Gehäuse 2 hindurchströmende Lösung oder Suspension mit den abzubauenden Tensiden, d.h. beispielsweise das entsprechende Abwasser, durch diese Anoden 3 hindurchfließen muß. Zu diesem Zweck sind die Anoden 3 gemäß Fig. 3 so in die Wandung des Gehäuses 2 eingesetzt, dass keine Lösung/Suspension an den Anoden 3 vorbeiströmen kann. Dies ist in Fig. 3 zeichnerisch angedeutet, wobei die punktierten Linien die Wandung des Gehäuses 2 mit ihrer entsprechenden Wandstärke symbolisieren.

Um ein Hindurchströmen der Lösung/Suspension durch die Anoden 3 zu ermöglichen, bestehen die Anoden 3 im vorliegenden Fall aus Titandrahtpresslingen, die zusätzlich platiniert, d.h. mit einer Platinschicht überzogen sind. Die zu behandelnde Lösung/Suspension strömt dann durch die in diesen Presslingen vorhandenen offenen Hohlräume hindurch, wobei gleichzeitig ein inniger Kontakt der in der Lösung/Suspension enthaltenen Tenside mit den Oberflächen der Anoden 3 und damit der für die elektrolytische Zersetzung notwendige Elektronenaustausch ermöglicht wird.

Die Kathoden 4 gemäß Fig. 3 sind stabartig ausgebildet und bestehen im vorliegenden Fall aus Blei.

Das Gehäuse 2 kann grundsätzlich aus unterschiedlichen Materialien gefertigt sein. In der Regel wird man hier zweckmäßigerweise Kunststoffmaterialien verwenden, wie beispielsweise PVDF (Polyvinylidenfluorid), PTFE (Polytetrafluorethylen), PP (Polypropylen) oder PMMA (Polymethylmethacrylat).

Die in Fig. 3 dargestellte Vorrichtung 1 wurde für Versuche im Labor- und Technikumsmaßstab entwickelt. Dementsprechend betrug die Länge der Vorrichtung 1 25 cm, ihre Breite 8 cm und ihre Höhe 10 cm. Die Abmessungen der Titananoden betrugen 5 cm x 4 cm x 2 cm.

Die Vorrichtung 1 wurde gemäß Beispiel 2 so betrieben, dass mit Hilfe des Anschlusses 5 das auch gemäß Beispiel 1 bereits eingesetzte Spülwasser aus der Chrombeize bei der galvanischen Beschichtung von Kunststoffteilen in das Innere des Gehäuses 2 eingeleitet wurde. Der Zustrom des Abwassers erfolgte in einem gleichmäßigen Volumenstrom. Dieser wurde nach der Behandlung mit Hilfe des Anschlusses 6 wieder aus dem Inneren des Gehäuses 2 herausgeleitet. Der Volumenstrom wurde mit Hilfe einer geeigneten Pumpe (nicht dargestellt) in entsprechender Weise aufrechterhalten.

Die Anschlusselemente 7 und 8 der Anoden 3 bzw. der Kathoden 4 wurden mit einem Gleichrichter verbunden. Im vorliegenden Fall wurde, bezogen auf die Anodenoberfläche, mit einer Stromdichte von 5 A/dm² gearbeitet. Arbeitstemperatur war Raumtemperatur.

Der Volumenstrom des Abwassers wurde so eingestellt, dass das über den Anschluss 5 eintretende Abwasser innerhalb eines Zeitraums von 10 Sekunden den Anschluss 6 erreichte. Insgesamt wurden so innerhalb von 30 Minuten 5 Liter Abwasser im Kreislauf geführt und behandelt. Eine Analyse ergab, dass innerhalb dieses Zeitraums ein im wesentlichen vollständiger (98 prozentiger) Abbau der im eintretenden Abwasser enthaltenen Tenside erreicht werden konnte. Das gleiche Ergebnis kann auch ohne Kreislaufführung durch ein Hintereinanderschalten von mehreren Zellen (mit gegebenenfalls reduziertem Volumenstrom) erreicht werden.
Dies zeigt, dass die erfindungsgemäße Vorrichtung 1 grundsätzlich zum Abbau teilfluorierter und perfluorierter Tenside geeignet ist. Durch den Betrieb im Durchflussverfahren ist es ohne weiteres möglich, das zugrundeliegende Abbauverfahren und die Vorrichtung in einen industriellen Galvanisierprozess zu integrieren.

Die Vorrichtung 1 hat den entscheidenden Vorteil, dass sie zum einen in einem Durchflussverfahren (kontinuierlich) betrieben werden kann und zum anderen eine große Anodenoberfläche zur Verfügung stellt, an der die elektrolytische Zersetzung der Tenside stattfinden kann. Dies wird auch dadurch noch unterstützt, dass das zu behandelnde Abwasser durch das Durchströmen der Anode(n) quasi gezwungen wird, mit der Anodenoberfläche in Kontakt zu treten. Durch die Anordnung mehrerer Anoden hintereinander (und damit mehrerer Reaktionsräume/Elektrolysezellen) wird ein sehr hoher Abbaugrad bis hin zu einem vollständigen Abbau ermöglicht.

Fig. 3 verdeutlicht auch, dass mit Hilfe der beschriebenen Vorrichtungen modulartige oder arrayartige Anordnungen möglich sind. So könen beispielsweise eine Mehrzahl oder eine Vielzahl von Gehäusen mit mindestens einem aus Anode und Kathode bestehenden Elektrodenpaar hintereinander und/oder nebeneinander angeordnet sein. Dabei ist es ohne weiteres möglich, mit gemeinsamen Zuläufen und Abläufen oder getrennten Zuläufen und Abläufen für das Abwasser zu arbeiten.

## Patentansprüche

1. Verfahren zum Abbau von teilfluorierten und perfluorierten Tensiden (PFT), die aus Galvanikabwässern stammen, welche bei der Verchromung oder Metallisierung von Metallteilen oder Kunststoffteilen, insbesondere von Sanitärgegenständen, anfallen, wobei
- das Tensid in Lösung oder Suspension vorliegt und elektrolytisch durch anodische Oxidation zersetzt wird,
- die anodische Oxidation an einer Anode aus Titan, insbesondere aus platiniertem Titan, stattfindet, und
- eine Kathode aus Blei oder aus einer Bleilegierung vorgesehen ist.

2. Verfahren nach Anspruch 1, **dadurch gekennzeichnet, dass** es bei einer Stromdichte von mindestens 1 A/dm², vorzugsweise von mindestens 3 A/dm², insbesondere zwischen 4 bis 6 A/dm², durchgeführt wird.

3. Verfahren nach Anspruch 1 oder Anspruch 2, **dadurch gekennzeichnet, dass** es bei einer Spannung von mindestens 3 V, vorzugsweise von mindestens 10 V, insbesondere von ca. 15 V, durchgeführt wird.

4. Verfahren nach einem der vorhergehenden Ansprüche, **dadurch gekennzeichnet, dass** es über einen Zeitraum von mindestens 3 Stunden, vorzugsweise von mindestens 10 Stunden durchgeführt wird.

5. Verfahren nach einem der vorhergehenden Ansprüche, **dadurch gekennzeichnet, dass** es sich bei dem perfluorierten Tensid um ein perfluoriertes Alkylsulfonat (PFAS) handelt, wobei es sich bei dem perfluorierten Alkylsulfonat vorzugsweise um Perfluoroktansulfonat (PFOS) oder um Perfluorobutansulfonat (PFBS) handelt.

6. Verfahren nach einem der vorhergehenden Ansprüche, **dadurch gekennzeichnet, dass** es sich bei dem teilfluorierten Tensid um H4-Perfluoroctylsufonat (H4PFOS) handelt.

7. Verfahren nach einem der vorhergehenden Ansprüche, **dadurch gekennzeichnet, dass** es kontinuierlich betrieben wird.

8. Verfahren nach einem der vorhergehenden Ansprüche, **dadurch gekennzeichnet, dass** es als Durchflussverfahren betrieben wird.

9. Verfahren nach einem der vorhergehenden Ansprüche, insbesondere nach Anspruch 8, **dadurch gekennzeichnet, dass** mindestens eine Elektrode, vorzugsweise die Anode, derart ausgebildet ist, dass die Lösung oder Suspension durch diese Elektrode hindurchleitbar ist.

## Claims

1. A method of decomposing partially fluorinated and perfluorinated surfactants (PFSs) which originate from electroplating wastewaters obtained in the chromium plating or metallization of metal parts or plastic parts, in particular of sanitary articles, wherein
- the surfactant is present in solution or suspension and is electrolytically decomposed by anodic oxidation,
- the anodic oxidation takes place at an anode composed of titanium, in particular platinum-plated titanium, and
- a cathode composed of lead or a lead alloy is provided.

2. The method according to claim 1, **characterized in that** it is carried out at a current density of at least 1 A/dm², preferably at least 3 A/dm², in particular in the range from 4 to 6 A/dm².

3. The method according to claim 1 or claim 2, **characterized in that** it is carried out at a voltage of at least 3 V, preferably at least 10 V, in particular about 15 V.

4. The method according to any one of the preceding claims, **characterized in that** it is carried out over a period of at least 3 hours, preferably at least 10 hours.

5. The method according to any one of the preceding claims, **characterized in that** the perfluorinated surfactant is a perfluorinated alkylsulfonate (PFAS), wherein the perfluorinated alkylsulfonate preferably is perfluorooctanesulfonate (PFOS) or perfluorobutanesulfonate (PFBS).

6. The method according to any one of the preceding claims, **characterized in that** the partially fluorinated surfactant is H4-perfluorooctylsulfonate (H4PFOS).

7. The method according to any one of the preceding claims, **characterized in that** it is carried out continuously.

8. The method according to any one of the preceding claims, **characterized in that** it is carried out as a flow process.

9. The method according to any one of the preceding claims, in particular according to claim 8, **characterized in that** at least one electrode, preferably the anode, is configured in such a way that the solution or suspension can be passed through this electrode.

## Revendications

1. Procédé pour la dégradation de tensioactifs partiellement fluorés et perfluorés (PFT) qui proviennent d'eaux usées galvaniques, qui sont produites lors du chromage ou de la métallisation de pièces métalliques ou de pièces en matériau synthétique, en particulier d'objets sanitaires,
- le tensioactif se trouvant en solution ou en suspension et étant décomposé de manière électrolytique par oxydation anodique,
- l'oxydation anodique ayant lieu au niveau d'une anode en titane, en particulier en titane couvert de platine et
- une cathode en plomb ou en alliage de plomb étant utilisée.

2. Procédé selon la revendication 1, **caractérisé en ce qu'**il est réalisé à une densité de courant d'au moins 1 A/dm², de préférence d'au moins 3 A/dm², en particulier entre 4 à 6 A/dm².

3. Procédé selon la revendication 1 ou la revendication 2, **caractérisé en ce qu'**il est réalisé à une tension d'au moins 3 V, de préférence d'au moins 10 V, en particulier d'environ 15 V.

4. Procédé selon l'une quelconque des revendications précédentes, **caractérisé en ce qu'**il est réalisé sur une période d'au moins 3 heures, de préférence d'au moins 10 heures.

5. Procédé selon l'une quelconque des revendications précédentes, **caractérisé en ce qu'**il s'agit, pour le tensioactif perfluoré, d'un alkylsulfonate perfluoré (PFAS), l'alkylsulfonate perfluoré étant de préférence le perfluorooctanesulfonate (PFOS) ou le perfluorobutanesulfonate (PFBS).

6. Procédé selon l'une quelconque des revendications précédentes, **caractérisé en ce qu'**il s'agit, pour le tensioactif partiellement fluoré, de H4-perfluoro-octylsulfonate (H4PFOS).

7. Procédé selon l'une quelconque des revendications précédentes, **caractérisé en ce qu'**il est réalisé en continu.

8. Procédé selon l'une quelconque des revendications précédentes, **caractérisé en ce qu'**il est réalisé comme un procédé en flux.

9. Procédé selon l'une quelconque des revendications précédentes, en particulier selon la revendication 8, **caractérisé en ce qu'**au moins une électrode, de préférence l'anode, est réalisée de manière telle que la solution ou la suspension peut être guidée à travers cette électrode.
